# EUROPEAN PATENT APPLICATION

(11) **EP 4 059 599 A1**
(43) Date of publication of application: **21.09.2022**
(21) Application number: 20887742.3
(22) Date of filing: 12.11.2020
(51) Int. Cl.: B01J 19/00, B01J 19/18

(54) **POLYMERIZATION REACTOR**

(30) Priority: 15.11.2019 KR 20190147042
(71) Applicant: Hanwha Solutions Corporation, Jung-gu Seoul 04541 (KR)
(72) Inventor: AHAN, Woo Youl, Daejeon 34128 (KR); LEE, Shinbeom, Daejeon 34128 (KR); LEE, Hye Won, Daejeon 34128 (KR); HAN, Keedo, Daejeon 34128 (KR)
(74) Representative: Berggren Oy
(86) International application number: PCT/KR2020/015920
(87) International publication number: WO 2021/096261

(57) **Abstract**

A polymerization reactor according to an embodiment of the present invention includes: a reaction container; an agitation wing installed in the reaction container and agitating a reaction product; and a plurality of cooling baffles arranged at regular intervals along a circumferential direction of the reaction container, wherein the cooling baffles are installed in a side wall of the reaction container, and at least one of the cooling baffles is bent.

## Description

### [Technical Field]

### CROSS-REFERENCE TO RELATED APPLICATION

This application claims priority to and the benefit of Korean Patent Application No. 10-2019-0147042 filed in the Korean Intellectual Property Office on November 15, 2019, the entire contents of which are incorporated herein by reference.

The present invention relates to a reactor. More particularly, the present invention relates to a PVC polymerization reactor.

### [Background Art]

A PVC reactor needs to control a temperature within a deviation of 5 ° C or less to improve product quality and prevent abnormal polymerization. Thus, a device that can remove reaction heat generated during polymerization is essential.

However, there is a limit to removing all the polymerization heat only with a jacket installed outside the reactor. This is because the area of heat removal using the jacket is limited, and the overall heat transfer coefficient is low due to the thickness and material of a reactor main body.

Accordingly, a reflux condenser (RC) is installed to control the temperature while condensing VCM vapor. However, increasing the operation of RC increases the amount of cold liquid falling over the interface, which adversely affects the quality of PVC products.

Therefore, a heat removal device such as a cooling baffle is installed inside the reactor to additionally remove polymerization heat. A structure of the cooling baffle installed inside is not complicated because a scale problem occurs, and can be installed so that it can also perform the role of a baffle.

When such a cooling baffle is drawn over the interface, scale is caused, and thus it is installed as much as possible on a bottom of a reaction vessel, which causes a slurry to accumulate when discharged after the reaction is completed.

When the slurry is accumulated, a worker enters the reactor and has to work, and thus safety issues and work time increase, and producibility decreases.

The above information disclosed in this Background section is only for enhancement of understanding of the background of the invention, and therefore it may contain information that does not form the prior art that is already known in this country to a person of ordinary skill in the art.

### [DISCLOSURE]

### [Technical Problem]

One aspect of the present invention is to provide a polymerization reactor that can prevent accumulation of slurry, while effectively removing reaction heat.

### [Technical Solution]

A polymerization reactor according to an embodiment of the present invention includes: a reaction container; an agitation wing installed in the reaction container and agitating a reaction product; and a plurality of cooling baffles arranged at regular intervals along a circumferential direction of the reaction container, wherein the cooling baffles are installed in a side wall of the reaction container, and at least one of the cooling baffles is bent.

The cooling baffle may include a horizontal portion coupled to the side wall of the reaction container and a vertical portion connected to an end of the horizontal portion in a perpendicular direction.

The cooling baffle may include a first pipe having an inlet through which a fluid inflows and a second pipe surrounding the first pipe and having an outlet through which the fluid is discharged.

The horizontal portion may be disposed below an interface of the reactor product.

The cooling baffles may include a first group of which cooling baffles are disposed relatively adjacent to the side wall of the reaction container, and a second group of which cooling baffles are disposed relatively adjacent to a center of the reaction container.

The cooling baffles included in the first group may have the same shape, and the cooling baffles included in the second group may have the same shape.

The cooling baffles included in the first group and the second group may be bent in a direction that face each other, and vertical portions of the cooling baffles in the first group and the second group may be disposed to face each other.

Horizontal portions of the cooling baffles in the first group are disposed in a lower portion of the reaction container, and horizontal portions of the cooling baffle in the second group are disposed in an upper portion of the reaction container.

The cooling baffles included the first group and the cooling baffles included in the second group may have different shapes.

A cooling baffle included in any one of the first group and the second group may be a bent type, and a cooling baffle included in the other may not bent and may be a straight-line type.

The cooling baffle in the first group may be a straight line-type, and the cooling baffle in the second group may be a bent-type.

### [Advantageous Effects]

According to the embodiment of the present invention, the cooling baffles are provided, and thus when a polymerization reaction is carried out, slurry accumulation can be prevented while effectively removing reaction heat, thereby producing high-quality PVC.

### [Description of the Drawings]

FIG. 1 schematically illustrates a polymerization reactor according to an embodiment of the present invention.
FIG. 2 schematically illustrates alignment of a cooling baffle according to the embodiment of the present invention.
FIG. 3 and FIG. 4 schematically illustrate a polymerization reactor according to another embodiment of the present invention.
FIG. 5 schematically show a reactor according to a conventional art.
FIG. 6 is a layout view of a cooling baffle of the reactor shown in FIG. 5.
FIG. 7 and FIG. 8 schematically illustrate reactors according to embodiments of the present invention.
FIG. 9 is a layout view of a cooling baffle of the reactors shown in FIG. 7 and FIG. 8.
FIG. 10 is a graph showing the degree of mixing near the upper interface in the reactor according to the present invention and conventional art.

### [Mode for Invention]

The present invention will be described more fully hereinafter with reference to the accompanying drawings, in which embodiments of the invention are shown. As those skilled in the art would realize, the described embodiments may be modified in various different ways, all without departing from the scope of the present invention.

In order to clearly describe the present invention, parts that are not related to the description are omitted, and the same reference numerals are attached to the same or similar constituent elements throughout the specification.

Throughout this specification and the claims that follow, when it is described that an element is "coupled" to another element, it includes not only "directly connected", but also "indirectly connected" between other members. In addition, unless explicitly described to the contrary, the word "comprise" and variations such as "comprises" or "comprising" will be understood to imply the inclusion of stated elements but not the exclusion of any other elements.

Hereinafter, an embodiment of the present invention will be described with reference to the accompanying drawings.

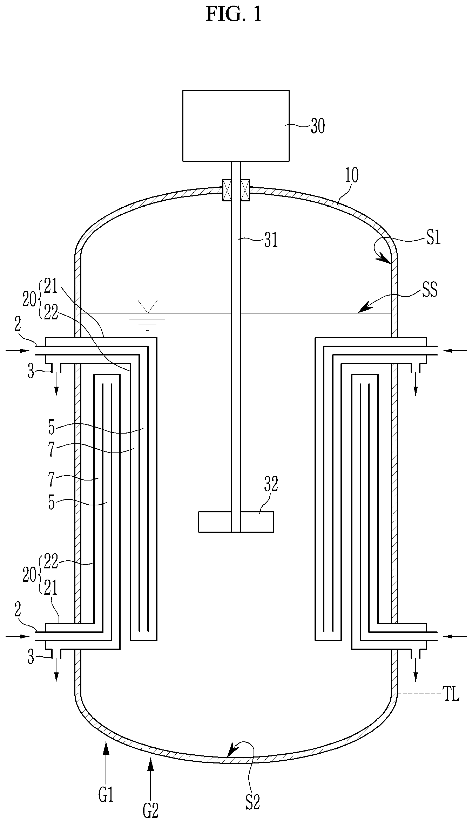

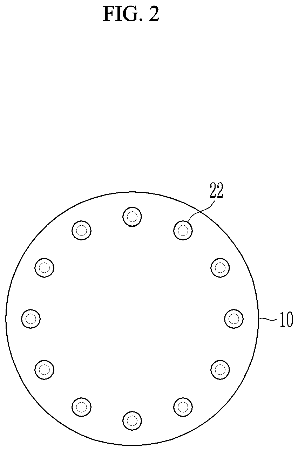

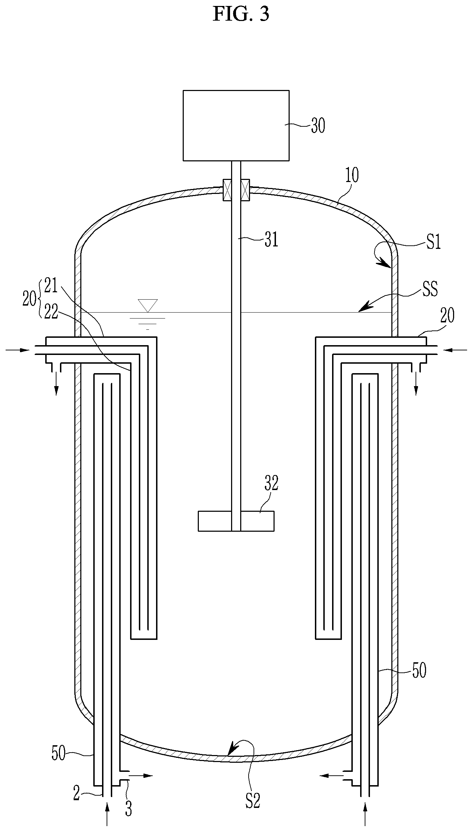

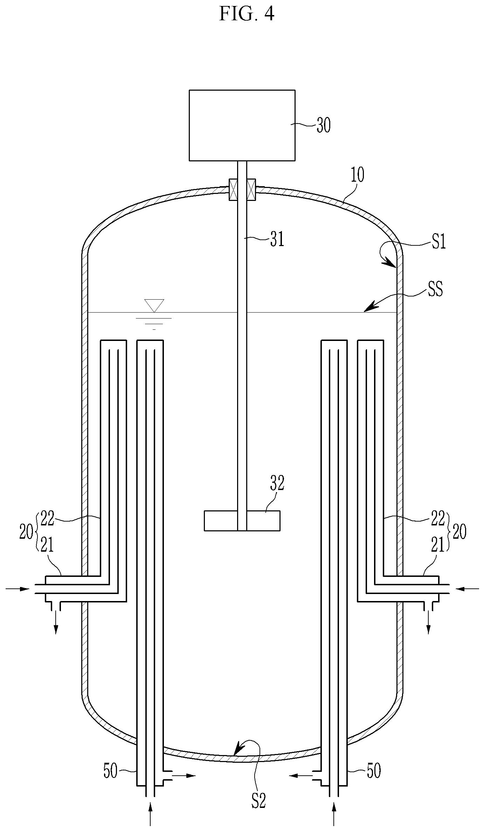

FIG. 1 schematically illustrates a polymerization reactor according to an embodiment of the present invention, FIG. 2 schematically illustrates alignment of a cooling baffle according to the embodiment of the present invention, and FIG. 3 and FIG. 4 schematically illustrate a polymerization reactor according to another embodiment of the present invention.

As shown in FIG. 1, a polymerization reactor according to an embodiment of the present invention includes a reaction container 10 containing a reaction product, a cooling baffle 20 installed in the reaction container 10, and an agitator.

The reactor may be a synthesis reactor of a material, and for example, may be a polymer polymerization reactor or a multimerization reactor.

The reaction container 10 includes a space for accommodating a reaction material, and may include a cylindrical-shaped side wall S1, a bottom portion S2, and a cover portion. The reaction container 10 may be formed in a double wall structure (not shown), and a fluid for heat exchange may circulate inside the double wall.

The agitator includes a motor 30, a rotation shaft 31, and an agitation wing 32. The rotation shaft 31 is located at a center of the reaction container 10 and is connected with the motor 30. The agitation wing 32 is disposed inside the reaction container 10, and is coupled to the rotation shaft 31 and rotates by the rotation shaft 31. A length direction of the agitation wing 32 may be a radical direction of the reaction container 10.

A set of agitation wings 32 may be installed at one end of the rotation shaft 31, or a plurality of agitation wings 32 may be installed along a length direction of the rotation shaft 31 at regular intervals. One set of agitation wings 32 may include at least two agitation wings 32. As for the agitation wings, the install position and number can be variously selected according to need.

The agitation wings can selectively be a paddle type, a propeller type, or a turbine type according to the reaction characteristic.

The cooling baffle 20 changes a circumferential flow of the reaction product according to rotation of the agitation wing 31 into an up-down flow to improve mixing of the reaction product and to effectively remove the heat of the reaction, and may be provided as a pipe through which a fluid flows for heat exchange.

The cooling baffle 20 is formed of a first pipe 5 having an inlet 2 through which the fluid inflows and a second pipe 7 surrounding the first pipe 5 and having an outlet 3 through which the fluid is discharged.

The fluid inflowed into the first pipe 5 is discharged through the second pipe 7, and a temperature of the reaction product is kept constant through heat exchange with the reaction product in the reaction container 10.

The cooling baffle 20 may be installed in plural along the circumferential direction (or interior circumference) of the reaction container 10, and may be disposed at a certain angle. 3 to 36 cooling baffles 20 may be installed at intervals of 20 degrees to 120 degrees. More preferably, 6 to 24 cooling baffles 20 may be installed at intervals of 30 degrees to 60 degrees. In this case, the number of installed cooling baffles 20 is the number of all cooling baffles 20 that are installed double.

The cooling baffle 20 is bent, and includes a horizontal portion 21 connected to a side wall of the reaction container 10 and a vertical portion 22 perpendicularly connected to an end of the horizontal portion 21. Thus, the cooling baffle 20 may have a shape of a capital letter L, or Korean letter " 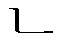 " or " 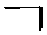 ".

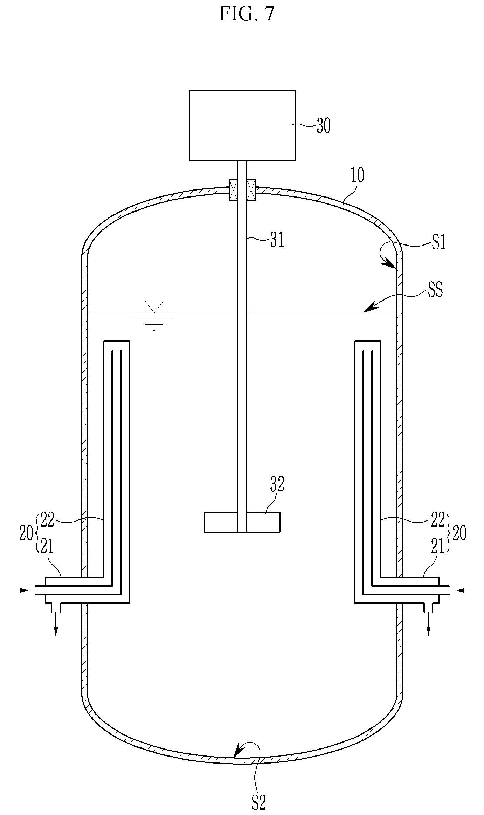

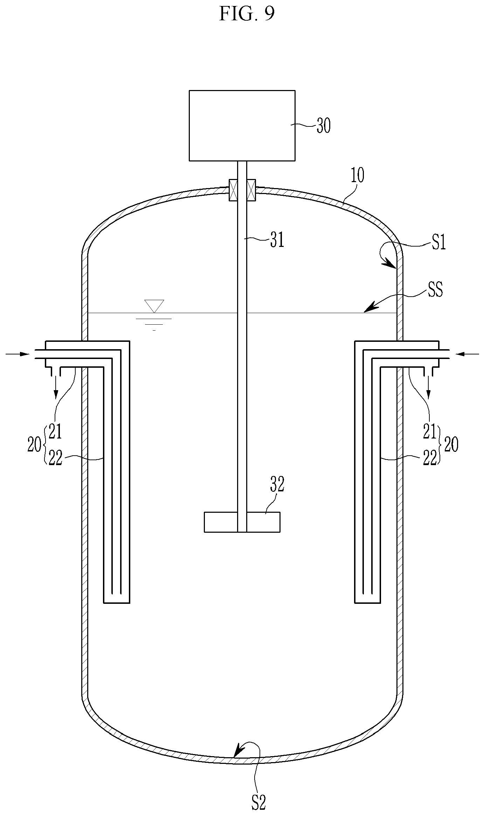

Every single cooling baffle 20 may be disposed at a certain angle in the circumferential direction (refer to FIG. 7 and FIG. 9), but is not limited thereto, and as shown in FIG. 1, it may be doubled by overlapping.

For convenience in description, hereinafter, cooling baffles 20 relatively adjacent to the side wall of the reaction container 10 are included in a first group G1, and cooling baffles 20 relatively adjacent to a center of the reaction container 10 are included in a second group G2.

The cooling baffles 20 included in the first group G1 have the same shape and the cooling baffles 20 included in the second group G2 have the same shape, and the shape of the cooling baffle in the first group G1 and the shape of the cooling baffle in the second group G2 may be the same or different.

As shown in FIG. 1, the cooling baffle 20 may be formed as a bent type in which cooling baffles of both the first group G1 and the second group G2 are bent.

As shown in FIG. 1, when the first group G1 and the second group G2 are disposed as a bent type, the vertical portions 22 of the first group G1 and the second group G2 may be disposed to face each other.

Accordingly, the horizontal portion 21 of the first group G1 may be disposed in a lower portion of the reaction container 10, and the horizontal portion 21 of the second group G2 may be disposed in an upper portion of the reaction container 10. In this case, the horizontal portion 21 is preferably disposed between an interface SS and a welding portion (or, a tangent line TL).

A gap between the vertical portion 22 of the first group G1 and the side wall of the reaction container 10 and a gap between the vertical portion 22 of the first group G1 and the vertical portion 22 of the second group G2 may be the same as each other.

As shown in FIG. 3 and FIG. 4, cooling baffles in the first group G1 and cooling baffles in the second group G2 may be different from each other.

As shown in FIG. 3, the cooling baffles 20 in the first group G1 are installed perpendicularly into the reaction container 10 from the bottom portion of the reaction container 10 and are provided as straight line-type cooling baffles 20, and the cooling baffles 20 in the second group G2 may be bent. In this case, a horizontal portion 21 of the bent-type cooling baffle 20 may be installed in an upper portion of the reaction container 10, and a vertical portion 22 of the bent-type cooling baffle 20 may be disposed to be parallel with the straight line-type cooling baffle 20.

In addition, as shown in FIG. 4, the cooling baffle 20 of the first group G1 may be formed as a bent type, and the second group G2 may be formed as a straight-line type 50 that is not bent. In this case, a horizontal portion 21 of the bent-type cooling baffle 20 may be disposed in a lower portion of the reaction container 10, and a vertical portion 22 of the bent-type cooling baffle 20 may be disposed to be parallel with the straight line-type cooling baffle 20.

As in the present invention, the bent cooling baffle is installed on an inner wall of the reaction container using a horizontal portion, and thus it is easy to attach and detach during repair and replacement.

In addition, by installing on the side wall of the reaction container in a bent form as in the present invention, when the slurry level is lowered after the reaction, the slurry is not applied to the jaw due to the cooling baffle, and it is easily discharged along the line.

Hereinafter, a result of an experiment carried out by using a reactor according to the present invention and a reactor according to a conventional art will be described.

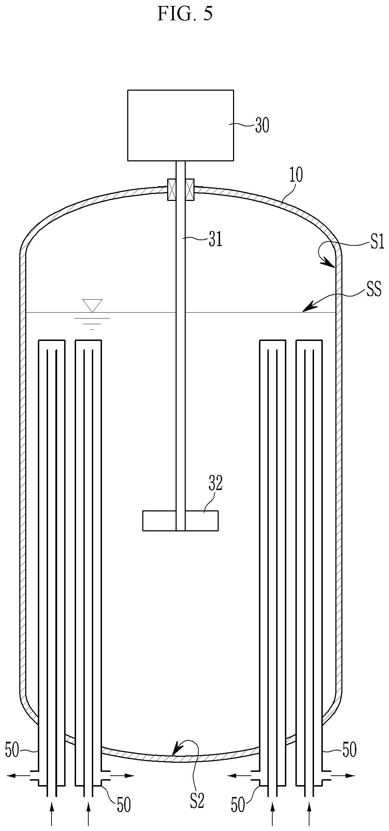

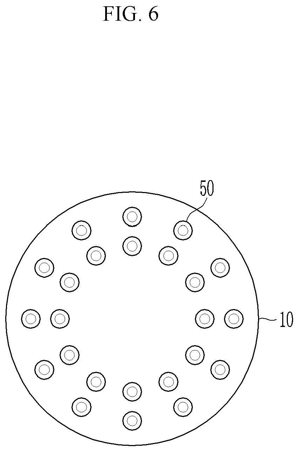

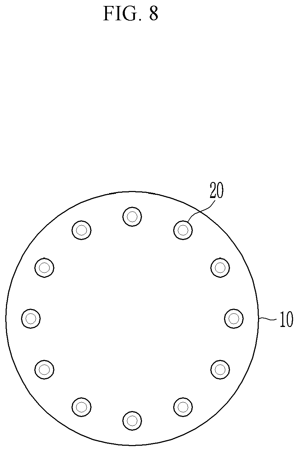

FIG. 5 schematically show a reactor according to a conventional art, and FIG. 6 is a layout view of a cooling baffle of the reactor shown in FIG. 5. FIG. 7 and FIG. 8 schematically illustrate reactors according to embodiments of the present invention, and FIG. 9 is a layout view of a cooling baffle of the reactors shown in FIG. 7 and FIG. 8.

A reactor in [Comparative Example] according to the conventional art and reactors in [Example 1] and [Example 2] according to the present invention are the same reactor, and the operating conditions are the same and the layout and the shape of the cooling baffle is different.

The operating condition is that the L/D of the reactor is 1.5, a reflux condenser is installed, an inner jacket is installed on the side of the reactor, and a spiral baffle is installed on the lower side. In addition, an agitator is a two-stage paddle, and the tip speed is set to 10 m/s.

[Comparative Example] is a reactor shown in FIG. 5 and FIG. 6, and a straight line-type cooling baffle is installed in a bottom portion of the reactor. In [Comparative Example], six cooling baffles may be installed at intervals of 60 degrees and doubly installed such that a total of 12 cooling baffles are installed.

[Example 1] is a reactor shown in FIG. 7 and FIG. 9, and a bent-type cooling baffle is installed in a side wall of the reactor. In [Example 1], 12 cooling baffles may be installed at intervals of 30 degrees along the interior circumference of the reactor.

[Example 2] is a reactor illustrated in FIG. 8 and FIG. 9, and a bent-type cooling baffle is installed in a side wall of the reactor 10. In [Example 2], 12 cooling baffles may be installed at intervals of 30 degrees along the interior circumference of the reactor. In this case, a horizontal portion 21 of the cooling baffle is disposed in an upper portion of the reactor, while being disposed below an interface.

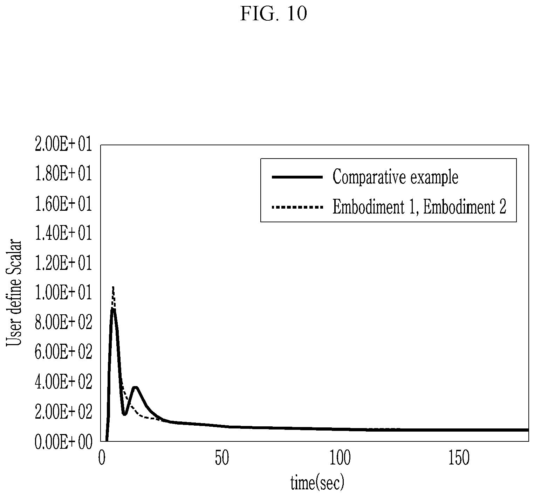

FIG. 10 is a graph showing the degree of mixing near the upper interface in the reactor according to the present invention and conventional art.

The mixing time is divided into 3 parts from the upper interface to the floor in the reactor, and when these are called upper, middle, and lower parts, respectively, the mixing time is a time until a deviation of a user defined scalar value in each area becomes 1e-05.

Referring to FIG. 10, in the case of Example 1 and Example 2, it can be seen that the peak is less than that of the comparative example and becomes stable in a short time.

[Table 1] below shows measured and recorded the mixing time of the Comparative Example, and Example 1 and Example, 2 shown in FIG. 10.

**[Table 1]**

| | Comparative Example | Example1 | Example2 |
|---|---|---|---|
| Mixing time (s) | 202 | 211 | |

Referring to [Table 1], the mixing time of the comparative example was 202 seconds and the mixing time of Example 1 and Example 2 was 211 seconds, and the difference in mixing time was about 10 seconds, confirming that the comparative example and Examples 1 and 2 are quite similar. That is, as in the embodiment of the present invention, the cooling baffle was installed single-layered instead of double-layered since a mixing time similar to that of the double-layered can be obtained, and the same effect can be expected even though the layout structure of the cooling baffle becomes simpler than the conventional one.

The following [Table 2] is a table that shows a heat exchange area ratio of the cooling baffle of the comparative example, and Example 1 and Example 2, shown in FIG. 10.

**[Table 2]**

| | Comparative Example | Example1 | Example2 |
|---|---|---|---|
| Cooling baffle heat exchange area ratio (compared to the comparative example) | 100 % | 87 % | 97 % |

Referring to [Table 2], when the area of the comparative example is 100 %, the ratio of the heat exchange area in Example 2 is 97 %, and it can be seen that the heat exchange area is maintained as it is.

Example 1 has an area ratio of 87 %, which slightly reduces the heat exchange area ratio compared to that of the comparative example, but the mixing time is short and the effect of no slurry accumulation can be obtained.

As such, Example 1 and Example 2 can maintain a certain level of heat exchange area compared to the double installation in the comparative example, even if the cooling baffle in the bent form is not installed double and is disposed by only the first group. Therefore, it is possible to reduce the install and replacement work that occur by installing the cooling baffle double.

In addition, it can be seen that the mixing efficiency is increased in Examples 1 and Example 2 compared to the04comparative example. This eliminates the phenomenon of slurry accumulation, thus reducing the non-poly time and increasing the production volume, and improving the PVC quality due to no slurry sticking.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

## Claims

1. A polymerization reactor comprising:
a reaction container;
an agitation wing installed in the reaction container and agitating a reaction product; and
a plurality of cooling baffles arranged at regular intervals along a circumferential direction of the reaction container,
wherein the cooling baffles are installed in a side wall of the reaction container, and at least one of the cooling baffles is bent.

2. The polymerization reactor of claim 1, wherein the cooling baffle comprises a horizontal portion coupled to the side wall of the reaction container and a vertical portion connected to an end of the horizontal portion in a perpendicular direction.

3. The polymerization reactor of claim 2, wherein the cooling baffle comprises a first pipe having an inlet through which a fluid inflows and a second pipe surrounding the first pipe and having an outlet through which the fluid is discharged.

4. The polymerization reactor of claim 2, wherein the horizontal portion is disposed below an interface of the reactor product.

5. The polymerization reactor of claim 2, wherein the cooling baffles comprise a first group of which cooling baffles are disposed relatively adjacent to the side wall of the reaction container, and a second group of which cooling baffles are disposed relatively adjacent to a center of the reaction container.

6. The polymerization reactor of claim 5, wherein
the cooling baffles included in the first group have the same shape, and
the cooling baffles included in the second group have the same shape.

7. The polymerization reactor of claim 6, wherein the cooling baffles included in the first group and the second group are bent in a direction that face each other, and
vertical portions of the cooling baffles in the first group and the second group are disposed to face each other.

8. The polymerization reactor of claim 7, wherein
horizontal portions of the cooling baffles in the first group are disposed in a lower portion of the reaction container, and horizontal portions of the cooling baffle in the second group are disposed in an upper portion of the reaction container.

9. The polymerization reactor of claim 6, wherein
the cooling baffles included the first group and the cooling baffles included in the second group have different shapes.

10. The polymerization reactor of claim 9, wherein
a cooling baffle included in any one of the first group and the second group is a bent type, and
a cooling baffle included in the other is not bent and is a straight-line type.

11. The polymerization reactor of claim 10, wherein
the cooling baffle in the first group is a straight line-type, and
the cooling baffle in the second group is a bent-type.
